# EUROPÄISCHE PATENTSCHRIFT

(11) **EP 0 375 618 B1**
(45) Veröffentlichungstag und Bekanntmachung des Hinweises auf die Patenterteilung: **07.02.1996**
(21) Anmeldenummer: 89810954.1
(22) Anmeldetag: 14.12.1989
(51) Int. Cl.: C08K 13/02, C08J 5/24

(54) **Flammfestes Erzeugnis**
Flame-retardant product
Produit ignifugeant

(30) Priorität: 23.12.1988 CH 4783/88
(43) Veröffentlichungstag der Anmeldung: 27.06.1990
(73) Patentinhaber: MATEC HOLDING AG, CH-8700 Küsnacht (CH)
(72) Erfinder: Thijssen, Stan, D-6430 Bad Hersfeld (DE); Laser, Jürgen, D-6437 Kirchheim (DE)
(74) Vertreter: Ritscher, Thomas, Dr.

(56) Entgegenhaltungen:
- DE-A- 3 219 792
- DE-U- 8 700 170
- FR-A- 2 340 346
- PATENT ABSTRACTS OF JAPAN, Band 9, Nr. 228 (C-303)[1951], 13. September 1985

## Beschreibung

Die Erfindung betrifft ein flammfestes Erzeugnis enthaltend Fasermaterial und/oder Füllstoffe sowie ein Reaktionsharz als Bindemittel und mehrere Flammschutzmittel.

Erzeugnisse mit einem Reaktionsharz als Bindemittel finden in der Technik vielfach Verwendung, sei es als Formmassen oder daraus hergestellte Formteile oder als Vliese oder Bahnen sowie als Schichtpreßstoffe.

Für viele Anwendungen ist es erforderlich, derartige Erzeugnisse mit einem möglichst guten Flammschutz auszurüsten. Dafür ist es bekannt, Kunststoffmischungen flammhemmend oder flammfest einzustellen, wozu bestimmte Flammschutzmittel- oder anorganische Füllstoffkombinationen verwendet werden und überdies der Harzanteil unter 15% gehalten wird, wie dies z.B. in DE-G-87 00 170.5 beschrieben ist.

Für viele Anwendungszwecke ist diese Lösung des Problems jedoch nicht anwendbar, sei es, weil Flammschutzmittel wie Antimontrioxid oder halogenierte Verbindungen aus toxikologischen Überlegungen nicht erwünscht sind oder weil der Anteil an organischem Bindemittel aus technischen Gründen höher sein muß.

Aus DE-A-32 19 792 sind Harzmassen mit hohem Harzanteil bekannt, die ein Reaktionsharz und Melaminborat enthalten. Diese Massen und die daraus hergestellten Erzeunisse sind nur flammhemmend und selbstverlöschend, wenn sie als Füllmaterial Dolomitpulver, Glasfasern oder Glasgewebe enthalten.

Der Wunsch der Anwender geht darüber hinaus aber auch nach Formmassen und daraus hergestellten Erzeugnissen, die bei relativ hohem Harzanteil (bis ca. 50%) und bei leicht brennbaren organischen Füll- und Verstärkerstoffen, z.B. synthetischen und natürlichen organischen Fasern eine ausreichende Flammfestigkeit aufweisen und möglichst nicht nachglimmen.

Aus der FR-A-2 340 346 sind Harzmassen bekannt, welche als Beschichtung auf flächige Bauelemente aufgetragen werden können, sich jedoch nicht unmittelbar zur Herstellung von flammfesten Erzeugnissen aus brennbarem organischen Fasermaterial eignen.

Das Patent Abstract of Japan, vol. 9, No. 228 (C-303) [1951] beschreibt eine Formmasse aus einem Novolak-Harz, Mg(OH)₂, Borsäure und Holzmehl. Die Formmasse enthält zusätzlich ein Flammschutzmittel, das jedoch nicht näher identifiziert ist.

Der vorliegende Erfindung lag darum die Aufgabe zugrunde, ein flammfestes Erzeugnis zu schaffen, das auch bei hohem Harzanteil flamm- und glutfest sowie selbstverlöschend ist und möglichst wenig nachglimmt, selbst wenn es brennbares, organisches Füllmaterial enthält. Darüber hinaus soll dieses Erzeugnis in seinen wesentlichen physikalischen Gebrauchs-Eigenschaften (z.B. bezüglich seiner mechanischen Festigkeit) gegenüber entsprechenden herkömmlichen Erzeugnissen nicht verschlechtert sein und soll unter Brandbedingungen möglichst keine toxischen Gase wie z.B. halogenierte Verbindungen freisetzen.

Diese Aufgabe wird mit einem flammfesten Erzeugnis der eingangs genannten Art gelöst, das dadurch gekennzeichnet ist, daß der Anteil des Reaktionsharzes bis zu 50 Gew.% beträgt und die Flammschutzmittel eine aus organischen Boraten, Salzen von Phosphorsäuren und Oxidhydraten des Magnesiums und/oder Aluminiums bestehende Flammschutzmittelkombination bilden, deren Anteil 3-35 Gew.% beträgt.

Eine erprobte Ausführungsform dieses Erzeugnisses ist dadurch gekennzeichnet, daß die Flammschutzmittelkombination 20-60 Gew.% organische Borate, 15-50 Gew.% Salze von Phosphorsäuren und 15-50 Gew.% Oxidhydrate des Magnesiums und/ oder Aluminiums und vorzugsweise 35-45 Gew.% organische Borate, 25-35 Gew.% Salze von Phosphorsäure und 25-35 Gew.% Oxidhydrate des Magnesiums und/oder Aluminiums.

Es war gefunden worden, daß solche Erzeugnisse, auch wenn deren Anteil an Reaktionsharz bis zu 50 Gew.% beträgt, sowohl im unausgehärteten als auch im gehärteten Zustand der Reaktionsharzmischung flammfest sind, solange der Anteil der Flammschutzmittelkombination 3-35 Gew.% beträgt.

Solche Erzeugnisse sind auch glutfest gemäß der Definition nach DIN 53459, oder weniger als 1 min nachglimmend nach dem Nordtest NT-Fire 002, oder VO nach UL 94 (entspricht IEC 707). Die Erzeugnisse zeigen unter Brandbedingungen bzw. bei Berührung mit heißen oder glühenden Oberflächen äußerst geringe Rauchentwicklung und keine halogenhaltigen toxischen Gase. Im gehärteten Zustand zeigen mit solchen Mischungen hergestellte Erzeunisse in den wesentlichen physikalischen Eigenschaften keine Verschlechterung.

Geeignete Bindemittel auf Basis eines Reaktionsharzes sind Harz/Härter-Kombinationen duroplastisch härtbarer Polymere wie der Aminoplaste, der ungesättigten Polyesterharze, Epoxidharze und insbesondere der Phenolharze. Besonders vorteilhaft sind die an sich bekannten Phenolharz-Hexamethylentetramin-Kombinationen, aber auch selbsthärtende Resole, insbesondere als Pulver vorliegende Festresole oder pulverförmige Gemische aus einem nicht wärmereaktiven Phenolharz und einem oder mehreren wärmereaktiven Kondensationsprodukten aus der Gruppe der Phenol-, Amino- oder Epoxidharze, wie sie in DE-A-36 25 443 beschrieben sind.

Brauchbare organische Borate sind Additions- oder Umsetzungsprodukte von Borsäuren insbesondere mit Melamin oder Hexamethylentetramin, z.B. Melaminborat, Hexamethylentetramin-borat oder -metaborat (Hexametaborat).

Salze von Phosphorsäuren sind beispielsweise Phosphate, Pyrophosphate, Metaphosphate und Polyphosphate. Verwendet werden insbesondere solche des Ammoniums. Einsetzbar sind sowohl Monoammoniumdihydrogenphosphat als auch Diammoniummonohydrogenphosphat oder Ammoniummetaphosphat und Ammoniumpolyphosphate der allgemeinen Formel (NH₄PO₃)ₙ, wobei n = 20-1000 ist. Andere bevorzugte Phosphate sind Melaminphosphat oder Melaminpyrophosphat.

Zur Herstellung der Flammschutzmittelkombination können sowohl aus der Gruppe der organischen Borate als auch der Phosphate entweder eine Verbindung oder Gemische mehrerer Verbindungen mit Magnesium- oder Aluminiumoxidhydrat oder mit beiden Oxidhydraten in den einleitend beschriebenen Mengenverhältnissen gemischt werden.

Die Flammschutzmittelkombination wird mit Reaktionsharzen, gegebenenfalls Härtern, Zusatzmitteln, Füll- und Verstärkerstoffen - z.B. Fasern - in an sich bekannter Weise zu härtbaren Formmassen verarbeitet. Sie kann aber auch in Verbindung mit flüssigen Reaktionsharzen durch Imprägnierung von Papier, Vliesen oder Geweben bei der Herstellung von Prepregs verwendet werden.

Wenn die Mischungen aus Bindemittel, Flammschutzmittelkombination und Füll- oder Verstärkerstoffen durch intensiven Mischprozeß unter Anwendung von Scherkräften hergestellt werden, können die verschiedenen Komponenten einzeln zugegeben werden.

Meist aber ist es zweckmäßig, Bindemittel und Flammschutzmittelkombination vorzumischen und so eine flammhemmende Reaktionsharzmischung herzustellen, die 6 bis 42,5% einer Flammschutzmittelkombination der oben genannten Zusammensetzung enthält.

Der Einsatz derartiger flammhemmender Reaktionsharzmischungen, die sich, ähnlich wie ein Masterbatch in der Gummiindustrie, durch optimale Verteilung der Komponenten und eine Vorbenetzung der Flammschutzmittelkombination durch die Bindemittel auszeichnen, empfiehlt sich insbesondere bei der Herstellung von Textilvliesen oder Prepregs.

Die Formmassen können zu räumlichen Formkörpern oder flächigen Gebilden, die Prepregs zu Schichtpressstoffen oder Formkörpern weiterverarbeitet werden.

Nachfolgend wird die Erfindung an einigen Beispielen erläutert, aus denen zu ersehen ist, daß die erfindungsgemäßen Erzeugnisse einen überraschenden synergistischen Effekt hinsichtlich der Flammfestigkeit zeigen.

### Beispiele 1-11

Für die Beispiele 1-11 wurden Textilfasern enthaltende flächige Gebilde durch Mischen von aufgeschlossenen Textilfasern mit einem gewöhnlichen Reaktionsharz oder einem flammschutzmittelhaltigen Reaktionsharz hergestellt. Die Mischung gemäss Beispiel 1 enthält kein Flammschutzmittel. Die Mischungen gemäss den Beispielen 2-11 enthalten alle mindestens ein Flammschutzmittel. Die Mischungen gemäß den Beispielen 8-11 entsprechen dem erfindungsgemäßen Erzeugnis. Aus den Mischungen wurden in bekannter Weise (siehe auch Ullmanns Encyclopädie der technischen Chemie, 4. Aufl., Band 23, S. 733-735, "Vliesstoffe - Herstellungsverfahren") Vliese von 8 mm Stärke gebildet, welche bei ca. 170°C ausgehärtet wurden. Hieraus wurden Prüfkörper mit den Abmessungen 800 x 300 mm ausgeschnitten. Diese Prüfkörper wurden nach dem "Nordtest NT Fire 002" wie nachfolgend beschrieben geprüft und zusätzlich wurde auch die Nachglimmzeit gemessen (siehe auch J. Troitzsch, "Brandverhalten von Kunststoffen", S. 192, Carl Hanser Verlag München, 1982).

Für die Prüfung wurden 3 x je 2 Prüfkörper mit den Abmessungen 800 x 8 mm senkrecht im Abstand von 50 mm parallel zueinander angebracht, 1 Prüfkörper um 125 mm nach oben versetzt und dessen untere Kante durch ein Winkeleisen gegen die Flamme geschützt.

Als Zündquelle wurde ein Teclu-Propan-Brenner 25 mm unterhalb der geschützten Kante des oberen Prüfkörpers installiert, wobei der Brenner sich im rechten Winkel in 60 mm Entfernung zum unteren Prüfkörper befand.

Nach dem Zünden des Brenners wurde 10 min lang der untere Prüfkörper beflammt. Das Material hatte die Prüfung bestanden, wenn folgende Kriterien erfüllt waren:
1. Der untere Prüfkörper darf während der 10 min zwar entflammen, muß aber direkt nach Entfernen der Flamme selbständig verlöschen.
2. Der obere Prüfkörper, der nicht direkt beflammt wird, darf während der 10 min nicht entflammen.
3. Nach dem Verlöschen der Flamme darf eine Nachglimmzeit von 1 min nicht überschritten werden.

Die Zusammensetzung der Prüfkörper gemäss den Beispielen 1-11 und die Ergebnisse von deren Prüfung sind in der Tabelle I angegeben. Die darin aufgeführten Beispiele 1-7 sind Vergleichsbeispiele, die Beispiele 8-11 entsprechen erfindungsgemäßen Erzeugnissen.

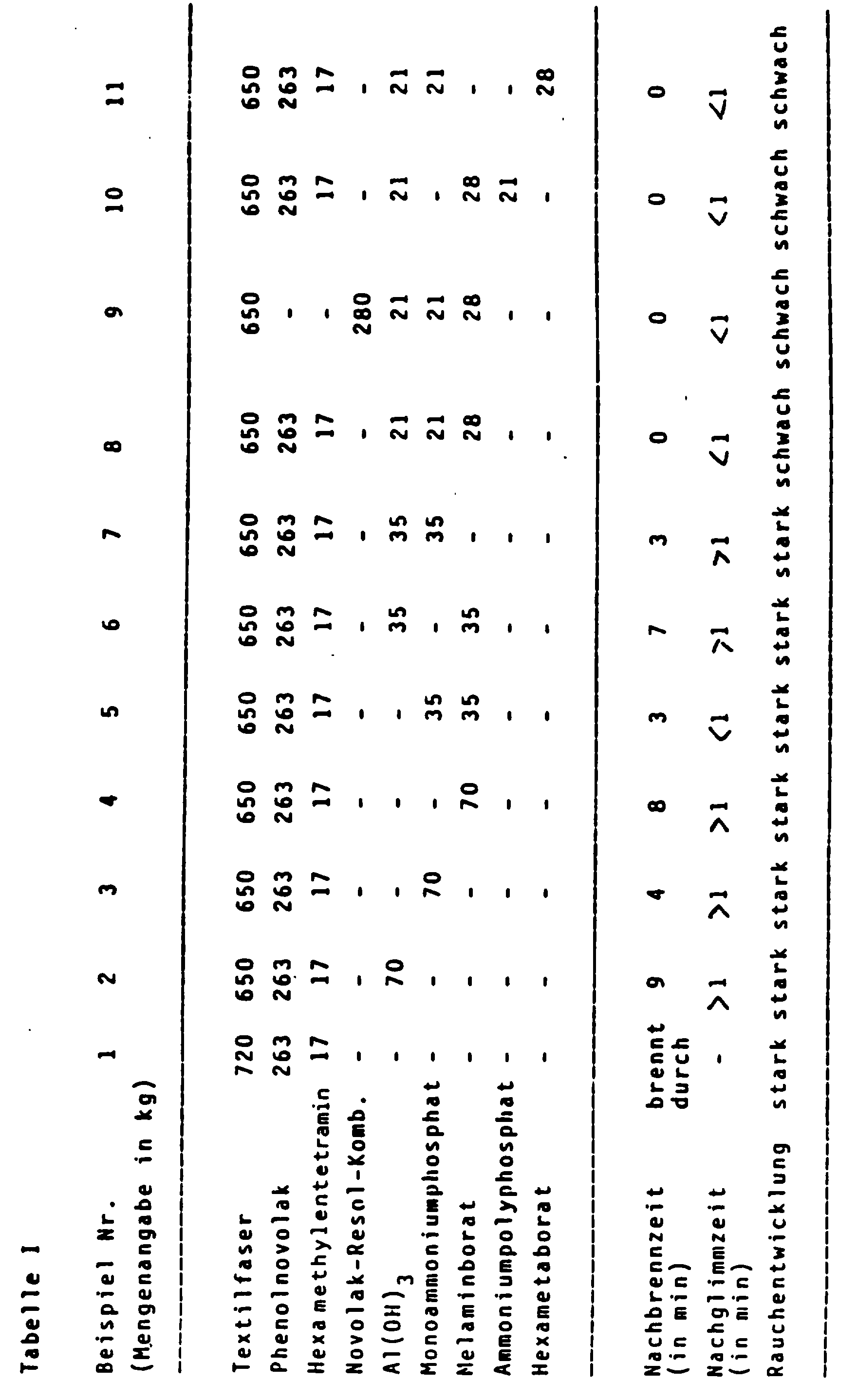

### Beispiele 12-19

In Tabelle II sind Beispiele von Prüfkörpern mit verschiedenartiger Zusammensetzung, die durch'vermischen der Komponenten auf einem beheizbaren Kneter bei ca. 110°C hergestellt wurden.

Aus diesen Mischungen wurden Platten von 120 mm Länge und Breite sowie 4,0 mm Stärke durch Heißpressung (4 min bei 170°C) gehärtet und daraus Prüfkörper mit den Abmessungen 120 mm Länge, 10,0 mm Breite und 4,0 mm Stärke geschnitten.

Die Prüfkörper wurden - in Anlehnung an DIN 53459 - bezüglich der Glutfestigkeit und des Nachglimmverhaltens geprüft. Die Ergebnisse der Prüfung sind in Tabelle II ebenfalls aufgeführt.

Die in Tabelle II aufgeführten Beispiele 12-15 sind Vergleichsbeispiele, die Beispiele 16-19 entsprechen erfindungsgemäßen Erzeugnissen.

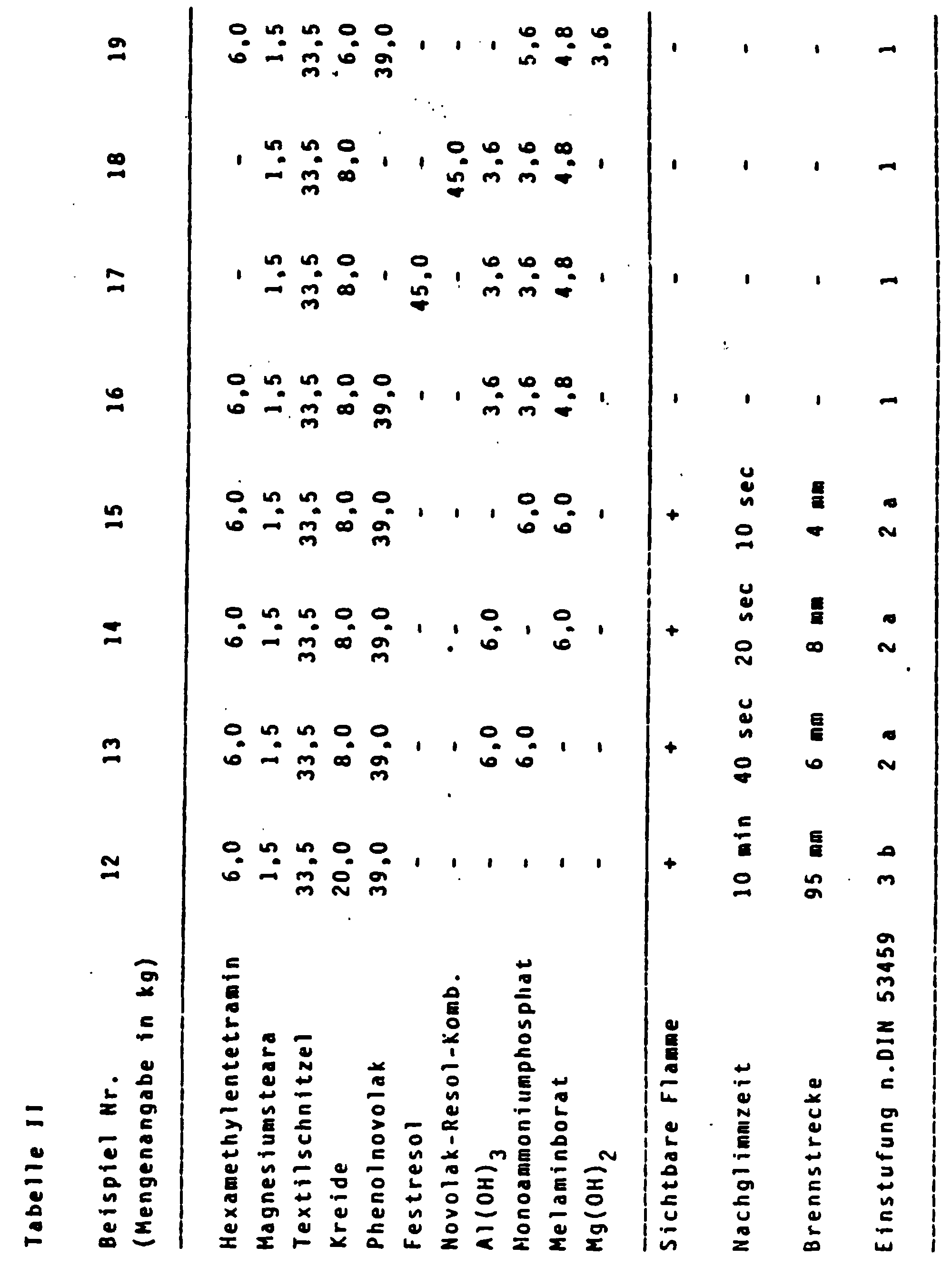

### Beispiel 20

Als Vergleichsbeispiel wurde Natroncellulosepapier in an sich bekannter Weise durch Tauchen in eine 55%ige Lösung eines Phenolresols in Methanol (Viskosität: 60-90 mPa.s; B-Zeit bei 130°C nach DIN 16916-02-C2: 7,5-8,5 min) imprägniert und in einem Durchlauftrockner bei einer Temperatur von 100-150°C vorreagiert.

Der Harzgehalt des Papierprepregs betrug ca. 45%. Anschliessend wurden mehrere Lagen des so erhaltenen Prepregs geschichtet und bei 160°C in einer Presse 60 min mit einem Druck von 100 bar verpreßt. Die Stärke des Laminates betrug ca. 1,6 mm.

Aus dem Laminat wurden Prüfkörper mit Abmessungen gemäß den Anforderungen der Prüfvorschriften UL 94 (Länge: 127 mm, Breite: 12,7 mm, Dicke: 1,6 mm) herausgesägt. Diese Prüfkörper verbrannten während der Prüfung, was nach UL 94 der Einstufung in HB entsprach.

### Beispiel 21

Als Beispiel 21 wurde ein Laminat hergestellt, welches 37,0 Gew.% Harz, 15,0 Gew.% der Flammschutzmittelkombination (bestehend aus Monoammoniumdihydrogenphosphat, Aluminiumoxidhydrat und Melaminborat im Gewichtsverhältnis 3:3:4) und 48 Gew.% Cellulose-Fasermaterial enthielt. Die aus diesem Laminat hergestellten Prüfkörper ergaben bei der Prüfung nach UL 94 die Einstufung in VO.

## Patentansprüche

1. Flammfestes Erzeugnis enthaltend:
- ein brennbares, zum überwiegenden Teil organisches Fasermaterial,
- Füllstoffe,
- bis zu 50 Gew.-% eines Reaktionsharzes und
- 3 bis 35 Gew.-% einer Flammschutzmittelkombination bestehend aus organischen Boraten, Salzen von Phosphorsäuren und Oxidhydraten des Magnesiums und/oder Aluminiums.

2. Erzeugnis nach Anspruch 1, dadurch gekennzeichnet, daß die Flammschutzmittelkombination 20-60 Gew.% organische Borate, 15-50 Gew.% Salze von Phosphorsäuren und 15-50 Gew.% Oxidhydrate des Magnesiums und/oder Aluminiums und vorzugsweise 35-45 Gew.% organische Borate, 25-35 Gew.% Salze von Phosphorsäure und 25-35 Gew.% Oxidhydrate des Magnesiums und/oder Aluminiums enthält.

3. Erzeugnis nach Anspruch 1, dadurch gekennzeichnet, daß die Flammschutzmittelkombination als organisches Borat Melaminborat oder Hexamethylentetraminmetaborat enthält.

4. Erzeugnis nach Anspruch 1, dadurch gekennzeichnet, daß das Reaktionsharz eine Harz-Härter-Kombination aus Phenolharz und Hexamethylentetramin ist.

5. Erzeugnis nach Anspruch 1, dadurch gekennzeichnet, daß das Reaktionsharz ein Phenolresol ist.

6. Erzeugnis nach Anspruch 1, dadurch gekennzeichnet, daß das Reaktionsharz ein pulverförmiges Gemisch aus einem nicht wärmereaktiven Phenolharz und einem oder mehreren wärmereaktiven Kondensationsprodukten aus der Gruppe der Phenol-, Amino- oder Epoxidharze ist.

7. Erzeugnis nach Anspruch 6, dadurch gekennzeichnet, daß das Reaktionsharz das nicht wärmereaktive Phenolharz und das wärmereaktive Kondensationsprodukt im Gewichtsverhältnis von 30:70 bis 90:10 enthält.

8. Erzeugnis nach Anspruch 1, dadurch gekennzeichnet, daß es gebräuchliche Pigmente und Zusatzstoffe enthält.

9. Erzeugnis nach Anspruch 1, dadurch gekennzeichnet, daß das organische Fasermaterial Textilschnitzel oder zerfaserte Textilien sind.

10. Erzeugnis nach Anspruch 1, dadurch gekennzeichnet, daß es ein flächenförmiges Gebilde oder ein daraus hergestelltes Formteil ist.

11. Erzeugnis nach Anspruch 1, dadurch gekennzeichnet, daß es eine härtbare Formmasse oder ein daraus hergestelltes Formteil ist.

12. Erzeugnis nach Anspruch 1, dadurch gekennzeichnet, daß es ein Schichtpreßstoff ist.

## Claims

1. A flame-retardant product containing:
- a combustible, predominatly organic fibrous material,
- fillers,
- up to 50 % by weight of a reaction resin and
- 3 to 35 % by weight of a flame-resistant combination consisting of organic borates, salts of phosphoric acid and oxide hydrates of magnesium and/or aluminium.

2. The product according to claim 1, characterized in that said flame-resistant combination contains 20-20 % by weight of organic borates, 15-50 % by weight of salts of phosphoric acid and 15-50 % by weight of oxide hydrates of magnesium and/or aluminium and preferably 35-45 % by weight of organic borates, 25-35 % by weight of salts of phosphoric acid and 25-35 % by weight of oxide hydrates of magnesium and/or aluminium.

3. The product according to claim 1, characterized in that said flame-resistant combination contains melamine borate or hexamethylene tetramine metaborate as said organic borate.

4. The product according to claim 1, characterized in that said reaction resin comprises a combination of a resin and a curing agent, said combination consisting of a phenolic resin and hexamethylene tetramine.

5. The product according to claim 1, chacterized in that said reaction resin comprises a phenol resol.

6. The product according to claim 1, characterized in that said reaction resin is a pulverulent mixture of a non heat setting phenolic resin and one or more heat setting condensates selected from the group consisting of phenolic, amino and epoxy resins.

7. The product according to claim 6, characterized in that said reaction resin contains said non heat setting phenolic resin and said heat setting condensate in a weight ratio of from 30:70 to 90:10.

8. The product according to claim 1, characterized in that it contains conventional pigments and additives.

9. The product according to claim 1, characterized in that said organic fiber material comprises textile chips or fibrillated textiles.

10. The product according to claim 1, characterized in that it is a stratiform structure or a moulded structure produced therefrom.

11. The product according to claim 1, characterized in that curable moulding material or a moulded structure produced therefrom.

12. The product according to claim 1, characterized in that it is a laminate.

## Revendications

1. Produit ininflammable contenant :
- un matériau fibreux combustible qui, pour sa plus grande part, est organique,
- des charges,
- jusqu'à 50 % en poids d'une résine réactive, et
- de 3 à 35 % en poids d'une combinaison d'agents d'ignifugation, constituée de borates organiques, de sels d'acides phosphoriques et d'hydroxydes de magnésium et/ou d'aluminium.

2. Produit selon la revendication 1, caractérisé en ce que la combinaison d'agents d'ignifugation contient de 20 à 60 % en poids de borates organiques, de 15 à 50 % en poids de sels d'acides phosphoriques, et de 15 à 50 % en poids d'hydroxydes de magnésium et/ou d'aluminium, et de préférence de 35 à 45 % en poids de borates organiques, de 25 à 35 % en poids de sels de l'acide phosphorique, et de 25 à 35 % en poids d'hydroxydes de magnésium et/ou d'aluminium.

3. Produit selon la revendication 1, caractérisé en ce que la combinaison d'agents d'ignifugation contient comme borate organique du borate de mélamine ou du métaborate d'hexaméthylènetétramine.

4. Produit selon la revendication 1, caractérisé en ce que la résine réactive est une combinaison résine-durcisseur constituée d'une résine phénolique et d'hexaméthylènetétramine.

5. Produit selon la revendication 1, caractérisé en ce que la résine réactive est un résol phénolique.

6. Produit selon la revendication 1, caractérisé en ce que la résine réactive est un mélange pulvérulent d'une résine phénolique non réactive à la chaleur, et d'un ou plusieurs produits de condensation, réactifs à la chaleur, choisis parmi l'ensemble comprenant les résines phénoliques, aminées, ou époxydes.

7. Produit selon la revendication 6, caractérisé en ce que la résine réactive contient la résine phénolique non réactive à la chaleur et le produit de condensation réactif à la chaleur selon un rapport pondéral de 30:70 à 90:10.

8. Produit selon la revendication 1, caractérisé en ce qu'il contient des pigments et additifs usuels.

9. Produit selon la revendication 1, caractérisé en ce que le matériau fibreux organique est constitué de déchets textiles ou de textiles effilochés.

10. Produit selon la revendication 1, caractérisé en ce qu'il s'agit d'une structure bidimensionnelle ou d'un objet façonné fabriqué à partir de cette dernière.

11. Produit selon la revendication 1, caractérisé en ce qu'il s'agit d'un mélange à mouler durcissable ou d'un objet façonné fabriqué à partir de ce dernier.

12. Produit selon la revendication 1, caractérisé en ce qu'il s'agit d'un stratifié.
